# EUROPÄISCHE PATENTSCHRIFT

(11) **EP 3 154 334 B1**
(45) Veröffentlichungstag und Bekanntmachung des Hinweises auf die Patenterteilung: **01.08.2018**
(21) Anmeldenummer: 14784401.3
(22) Anmeldetag: 01.10.2014
(51) Int. Cl.: A01G 24/28, A01G 24/44

(54) **VERFAHREN ZUR NUTZBARMACHUNG VON FEINTEILIGEM TORF**
METHOD FOR UTILISING FINE-PARTICLE PEAT
PROCÉDÉ POUR RENDRE EXPLOITABLE UNE TOURBE EN FINES PARTICULES

(30) Priorität: 28.07.2014 WO PCT/EP2014/002058
(43) Veröffentlichungstag der Anmeldung: 19.04.2017
(73) Patentinhaber: Jowat AG, 32758 Detmold (DE)
(72) Erfinder: TERFLOTH, Christian, 32760 Detmold (DE); SCHMIDT, Christian, 32760 Detmold (DE)
(74) Vertreter: Von Rohr Patentanwälte Partnerschaft mbB
(86) Internationale Anmeldenummer: PCT/EP2014/002670
(87) Internationale Veröffentlichungsnummer: WO 2016/015741

(56) Entgegenhaltungen:
- EP-A1- 0 971 015
- EP-B1- 0 487 655
- WO-A1-01/01757
- FR-A1- 2 771 026
- US-A1- 2006 248 795
- US-A1- 2010 292 354
- US-A1- 2014 182 199

## Beschreibung

Die vorliegende Erfindung betrifft das technische Gebiet der Verfestigung von Pflanzsubstraten bzw. der Teilchenvergrößerung von Pflanzsubstraten, insbesondere zur Nutzbarmachung von feinteiligem Torf.

Insbesondere betrifft die vorliegende Erfindung ein Verfahren zur Nutzbarmachung von feinteiligem Torf, insbesondere ein Verfahren zur Verbesserung der Festigkeit von Pflanzsubstraten.

Darüber hinaus betrifft die vorliegende Erfindung eine Bindemittelzusammensetzung, insbesondere zur Verfestigung von Pflanzsubstraten.

Weiterhin betrifft die vorliegende Erfindung die Verwendung einer Bindemittelzusammensetzung zur Verfestigung von Pflanzsubstraten sowie das auf diese Weise erhältliche Pflanzsubstrat. Schließlich betrifft die vorliegende Erfindung ein Pflanzsubstrat, welches eine Torf enthaltene Substratmischung sowie ein Bindemittel enthält.

Torf ist ein organisches Sediment, welches unter Luftabschluss durch unvollkommene Zersetzung abgestorbener pflanzlicher Substanzen in Mooren entsteht. Moore lassen sich prinzipiell in Niedermoore sowie Hochmoore unterteilen, wobei allein der Torf, welcher aus Hochmooren gewonnen wird, für industrielle und private Zwecke genutzt wird.

Torf bildet die Grundlage der meisten Pflanz- bzw. Kultursubstrate und Blumenerden, die im Hobby- sowie im Erwerbsgartenbau zum Einsatz kommen. Bei Pflanz- bzw. Kultursubstraten handelt es sich um Mischungen aus ausgesuchten Ausgangs- bzw. Grundstoffen, wie beispielsweise Torf, Holzfasern, Kompost oder auch Kokosmark. Diese Mischungen werden mit Dünger versetzt sowie gegebenenfalls mit Zuschlagstoffen optimiert. Auf diese Weise ist es möglich, Substrate bzw. Blumenerden bereitzustellen, welche an die speziellen Anforderungen der jeweiligen Pflanzen angepasst sind. Die Substratmischungen bzw. Blumenerden dienen als Wurzelraum für die gärtnerischen Kulturen.

Für Kultursubstrate werden unterschiedliche Torfqualitäten verwendet, deren Zusammensetzung auf die spezifischen Anforderungen der Aufzucht von unterschiedlichen Pflanzenarten abgestimmt ist. Neben verschiedenen Torfarten, wie Weißtorf und Schwarztorf, werden in der Herstellung der Substrate oder Blumenerden Zuschlagstoffe wie Kokos- oder Holzfasern, Düngemittel, Mineralien sowie Ton, Sand, Kalk oder Perlite eingesetzt.

Das Mischen der unterschiedlichen Torfsubstrate mit den pflanzenspezifischen Zuschlagstoffen kann auf unterschiedlichen Wegen erfolgen. Üblicherweise werden Förderbandsysteme und Trommel-Mischmaschinen verwendet, um homogene Mischungen herzustellen.

Weiß- und Schwarztorfe sowie verschiedene Torfunterarten unterscheiden sich in ihrem Zersetzungsgrad und damit im Anteil an noch erkennbarer pflanzlicher Struktur. Eine weitere Unterteilung der Torfe oder Torfbestandteile enthaltenden Substratmischungen erfolgt nach ihrer Dichte, welche im Bereich von ca. 100 kg/m³ bis etwa 800 kg/m³ liegen kann, sowie der Konsistenz und Partikelgröße. Unterschieden werden die Grade sehr fein, fein, mittel, grob und extra grob mit gegebenenfalls weiterer Klassifizierung, wie beispielsweise faserig. Schwarztorfe werden beispielsweise generell als fein oder sehr fein klassifiziert. Bei Weißtorfen hingegen werden Partikelgrößen bis 10 mm als fein oder sehr fein, bis 25 mm als mittel und größer als 25 mm als grob eingeordnet.

Zwar ist Torf eine hervorragende Grundlage für Kultursubstrate jeglicher Art, jedoch können bis zu 40 % des abgebauten Torfes aufgrund ihrer Konsistenz, insbesondere aufgrund einer ausgeprägten Feinteiligkeit des Torfes, nicht zur Herstellung von Kultursubstraten, insbesondere für den Erwerbsgartenbau, verwendet werden. Größere Aggregate und Agglomerate des Torfes zerfallen bei der maschinellen Verarbeitung bzw. können nicht mit den weiteren Ausgangs- bzw. Zuschlagsstoffen zu homogenen Kultursubstraten verarbeitet werden.

Im erwerbsmäßigen Gartenbau erfolgt die Aufzucht von Pflanzen in der Regel nach folgendem Prinzip: Die Substratmischung für die Pflanzenanzucht wird wahlweise in Pflanzentrays oder in Pflanztöpfe eingefüllt oder als sogenannte Presstöpfe in Form gepresst. Die verwendeten Pflanzentrays - oftmals kurz als Trays bezeichnet - können je nach Bauart ca. 40 bis 250 sogenannte Substrat-Plugs aufnehmen. Substrat-Plugs sind Formkörper aus Kultursubstrat- bzw. Pflanzsubstrat, welche in die Pflanzentrays gefüllt werden oder durch Einfüllung der Substratmischung in Pflanzentrays gebildet werden. Die Befüllung der Trays erfolgt üblicherweise von Hand oder mit Hilfe von Traybefüllern, die je nach Bauart unterschiedlichen Durchsatz ermöglichen.

Nach einer durch die Art der Pflanze bestimmten Keim- und Wachstumszeit erfolgt ein Überführen der Pflanze inklusive Wurzelwerk und umhüllendem Substrat-Plug in ein nächstgrößeres Pflanzgefäß. Hier zeigen sich größere Unterschiede zwischen einzelnen Torfen bzw. Substraten. Einige Substrate bieten eine hohe Festigkeit, d.h. die Form der Plugs bleibt beim Umsetzen der Pflanzen erhalten. Dies ist bei anderen Mischungen nicht der Fall. Im Falle des Umsetzens trennen sich Substrat und Wurzelwerk, d. h. nur die Pflanze kann umgesetzt werden, was vom gewerblichen Endanwender im Regelfall nicht gewünscht ist.

Da nicht alle festen bzw. formstabilen Torfmischungen als Substrate auf alle Pflanzen gleichermaßen anwendbar sind, muss man sich bei losen Torfmischungen technisch behelfen. Eine Abhilfe schaffen sogenannte Paperplug-Maschinen. Diese umhüllen eine definierte Menge Pflanzsubstrat mit einem Papier- oder Vliesmaterial, um den Plug mechanisch in Form zu halten. Nach der Umhüllung werden die Paperplugs manuell oder mit Hilfe von Robotern in die Trays eingesetzt. Nachteilig bei dieser Methode ist die Durchführung eines Zwischenschrittes, der Investitionen in Form von Maschinen und Papiermaterial benötigt sowie zusätzliche Zeit in Anspruch nimmt.

Im erwerbsmäßigen Gartenbau ist es daher wünschenswert, jede Torf- bzw. Substratmischung in einer Form zu erhalten, die eine Verwendung von Aufzuchthilfen wie Paperplugs überflüssig macht und eine Topf-, Tray- oder Presstopf-Anwendung erlaubt.

Es hat daher im Stand der Technik nicht an Versuchen gefehlt, Kultursubstrate auf Basis von Torf zu verfestigen. So beschreibt die EP 0 971 015 A1 die Verwendung einer Wasser-Isocyanat-Prepolymeremulsion zur Verfestigung von Pflanzsubstraten. Die Emulsion wird durch Mischen eines Isocyanat-Prepolymers mit Wasser hergestellt und muss anschließend innerhalb weniger Minuten durch Mischen mit dem Pflanzsubstrat weiterverarbeitet werden, um die gewünschten Formkörper herzustellen.

Weiterhin beschreibt die US 2006/0248795 A1 ein Verfahren zur Herstellung eines verfestigten Kultursubstrats, bei welchem eine Substratmischung mit einem thermoplastischen biologisch abbaubaren Bindemittel versetzt wird, wobei anschließend das Bindemittel durch Zufuhr von Wärme aufgeschmolzen wird. Hierdurch ist die Herstellung von Formkörpern auf Basis eines Kultursubstrates möglich. Die Verwendung von biologisch abbaubaren Schmelzklebstoffen ist jedoch apparativ und energetisch aufwendig, wodurch das Verfahren weder ökonomisch noch ökologisch sinnvoll durchzuführen ist.

Die EP 1 330 949 A1 beschreibt ein Verfahren sowie eine Vorrichtung zur Herstellung von aus Pflanzsubstrat und diesem zugemengten Verfestigungsmittel bestehenden Formkörpern. Hierbei werden Isocyanat-Prepolymere mit Wasser gemischt, so dass eine Emulsion entsteht, welche dann einem Pflanzsubstrat zugeben wird. Die Mischung wird anschließend in Matrizen eingefüllt und verdichtet, so dass Formkörper erhalten werden.

Schließlich beschreibt auch die WO 00/60922A1 ein Verfahren zur Herstellung von Formkörpern auf Basis von Isocyanat-Prepolymeren und Pflanzsubstraten.

In den vorgenannten Verfahren ist es zwar möglich, Pflanz- bzw. Kultursubstrate zu verfestigen, jedoch werden allein Formkörper geschaffen, das heißt die Partikelgröße des Torfes kann nicht gezielt eingestellt werden. Auch ist für viele Systeme eine biologische Abbaubarkeit nicht gegeben, weshalb die Verfahren nur bedingt eingesetzt werden können.

Darüber hinaus hat es sich bei den Verfahren des Standes der Technik als nachteilig erwiesen, dass diese oftmals bei erhöhten Temperaturen durchgeführt werden müssen oder nur äußerst geringe Verarbeitungszeiten bis zum Abbinden des Bindemittels aufweisen.

Weiterhin betrifft die US 2006/0248795 A1 ein Verfahren zur Herstellung von Kultursubstraten, welche zur Aufzucht von Pflanzen geeignet sind. Das Verfahren ist dadurch gekennzeichnet, dass in einem ersten Verfahrensschritt (a) ein partikelförmiges Basismaterial mit einem thermoplastischen, biologisch abbaubaren Bindemittel versetzt und in Verfahrensschritt (b) das Bindemittel so weit erhitzt wird, dass es zumindest partiell verflüssigt wird. In einem anschließenden Verfahrensschritt (c) wird die Mischung gekühlt, um das Bindemittel zumindest im Wesentlichen zu verfestigen, wodurch zumindest ein Teil des Basismaterials mittels des Bindemittels vernetzt wird.

Die US 2014/0182199 A1 betrifft zudem ein Pflanzsubstrat mit unterschiedlichen Dichten, bestehend einer kohärenten Matrix künstlich hergestellter Glas- oder Mineralfasern, welche mit einem Bindemittel gebunden sind, wobei das Substrat eine obere Oberfläche mit einer Aussparung aufweist, welche vorgesehen ist, um einen Samen oder einen Setzling aufzunehmen, und einer entgegengesetzten unteren Oberfläche, auf welcher das Substrat während der Anwendung steht. Das Substrat weist mindestens zwei Lagen auf, wobei eine der Lagen eine obere Lage ist, welche an der oberen Oberfläche angeordnet ist und eine erste Dichte aufweist, und eine der Lagen eine untere Lage ist, welche an der gegenüberliegenden unteren Oberfläche angeordnet ist und eine zweite Dichte aufweist.

Schließlich betrifft die US 2010/0292354 A1 eine wässrige Bindemittelzusammensetzung für Mineralfasern, aufweisend eine wasserlösliche Bindemittelkomponente, welche erhältlich ist durch Reaktion mindestens eine Alkanolamins, mindestens eines Carbonsäureanhydrids und mindestens einer Polyalkylenglycolkomponente, ausgewählt aus Polyalkylenglycol, dessen Copolymeren und Derivaten sowie optional Behandlung des Reaktionsproduktes mit einer Base.

Der vorliegenden Erfindung liegt daher die Aufgabe zugrunde, verfestigte Pflanzsubstrate sowie Pflanz- bzw. Kultursubstrate zur Verfügung zu stellen, wobei die zuvor geschilderten, im Zusammenhang mit dem Stand der Technik auftretenden Probleme und Nachteile zumindest weitgehend vermieden oder aber wenigstens abgeschwächt werden sollen.

Insbesondere ist es eine Aufgabe der vorliegenden Erfindung, ein Verfahren zur Nutzbarmachung von feinteiligem Torf, insbesondere ein Verfahren zur Verbesserung der Festigkeit von Pflanzsubstraten, bereitzustellen, welches sowohl eine Einstellung der Teilchengröße der Pflanzsubstrate sowie eine Herstellung von verfestigten Pflanzsubstraten ermöglicht und darüber hinaus ökonomisch wie ökologisch günstig durchzuführen ist.

Darüber hinaus ist es eine Aufgabe der vorliegenden Erfindung, verfestigte Pflanzsubstrate bereitzustellen, welche sich zur maschinellen Umsetzung der Setzlinge bzw. Pflanzen eignen und gegenüber den bislang bekannten Systemen des Standes der Technik deutlich einfacher herzustellen und zu handhaben sind.

Die zuvor geschilderte Aufgabenstellung wird erfindungsgemäß durch das Verfahren nach Anspruch 1 gelöst; weitere vorteilhafte Weiterbildungen und Ausgestaltungen des erfindungsgemäßen Verfahrens sind Gegenstand der diesbezüglichen Unteransprüche.

Weiterer Gegenstand der vorliegenden Erfindung ist eine Bindemittelzusammensetzung nach Anspruch 7; weitere vorteilhafte Weiterbildungen und Ausgestaltungen der erfindungsgemäßen Bindemittelzusammensetzung sind Gegenstand der diesbezüglichen Unteransprüche.

Wiederum weiterer Gegenstand der vorliegenden Erfindung ist die Verwendung der erfindungsgemäßen Bindemittelzusammensetzung zur Verfestigung von Pflanzsubstraten nach Anspruch 14.

Wiederum weiterer Gegenstand der vorliegenden Erfindung ist ein Pflanzsubstrat nach Anspruch 15.

Es versteht sich von selbst, dass bei der nachfolgenden Angabe von Werten, Zahlen und Bereichen die diesbezüglichen Werte-, Zahlen- und Bereichsangaben nicht beschränkend zu verstehen sind; es versteht sich für den Fachmann vielmehr von selbst, das einzelfallbedingt oder anwendungsbezogen von den angegebenen Bereichen bzw. Angaben abgewichen werden kann, ohne dass der Rahmen der vorliegenden Erfindung verlassen ist.

Zudem gilt, dass alle im Folgenden genannten Werte- bzw. Parameterangaben oder dergleichen grundsätzlich mit genormten bzw. standardisierten oder explizit angegebenen Bestimmungsverfahren oder mit dem Fachmann auf diesem Gebiet an sich geläufigen Bestimmungsmethoden ermittelt bzw. bestimmt werden können.

Es versteht sich von selbst, dass im Folgenden besondere Ausgestaltungen, Ausführungsformen oder dergleichen, welche nur im Zusammenhang mit einem Erfindungsaspekt beschrieben sind, auch in Bezug auf die anderen Erfindungsaspekte entsprechend gelten, ohne dass dies einer ausdrücklichen Erwähnung bedarf.

Weiterhin ist bei allen nachstehend genannten relativen bzw. prozentualen, insbesondere gewichtsbezogenen Mengenangaben zu beachten, dass diese im Rahmen der vorliegenden Erfindung vom Fachmann derart auszuwählen sind, dass in der Summe der jeweiligen Inhaltsstoffe, Zusatz- bzw. Hilfsstoffe oder dergleichen stets 100% bzw. 100 Gew.-% resultieren. Dies versteht sich für den Fachmann aber von selbst.

Dies vorausgeschickt, wird im Folgenden die vorliegende Erfindung näher beschrieben.

Gegenstand der vorliegenden Erfindung - gemäß einem **ersten** Aspekt vorliegen - ist somit ein Verfahren zur Nutzbarmachung von feinteiligem Torf, insbesondere ein Verfahren zur Verbesserung der Festigkeit von Pflanzsubstraten. Das Verfahren zeichnet sich dadurch aus, dass eine Torf enthaltende Substratmischung mit mindestens einer Bindemittelzusammensetzung, enthaltend mindestens ein Bindemittel, versetzt wird, wobei die Bindemittelzusammensetzung auf Basis einer Dispersion oder Lösung ausgebildet ist, wobei das Dispersions- oder Lösemittel Wasser ist, wobei die Bindemittelzusammensetzung mindestens einen Dispersionsklebstoff auf Basis eines organischen Klebstoffpolymers enthält, wobei das Klebstoffpolymer ausgewählt ist aus der Gruppe von Polyurethanen (PU), Polylactiden (PLA), Acrylaten, Chloropren, Vinylacetat-Ethylen-Copolymeren (VAE), Polyvinylalkoholen (PVOH) und Polyvinylacetaten (PVAc), wobei die Bindemittelzusammensetzung einen Feststoffgehalt von 0,2 bis 25 Gew.-%, bezogen auf die Bindemittelzusammensetzung, aufweist und wobei die Bindemittelzusammensetzung eine Brookfield-Viskosität bei 20 °C im Bereich von 20 bis 1.500 mPas aufweist, und dass das Bindemittel anschließend abbinden gelassen wird.

Im Rahmen der vorliegenden Erfindung werden somit aus feinteiligen Torfpartikeln und weiteren Bestandteilen von Pflanz- und Kultursubstraten größere Agglomerate der Substrate erhalten. Insbesondere lassen sich im Rahmen der vorliegenden Erfindung Netzwerke auf Basis des verwendeten Bindemittels zwischen den einzelnen Bestandteilen des Substrats herstellen, wodurch einerseits eine gezielte Einstellung der Partikelgröße des Substrats möglich wird und andererseits hochporöse wasseraufnahmefähige Formkörper erhalten werden können.

Unter einem Substrat wird dabei im Rahmen der vorliegenden Erfindung ein Nährboden bezeichnet, welcher zur Aufzucht von Pflanzen geeignet ist. Synonym werden Substrate im Rahmen der vorliegenden Erfindung auch als Kultur- bzw. Pflanzsubstrate bezeichnet.

Unter einem Bindemittel ist im Rahmen der vorliegenden Erfindung eine Substanz bzw. ein Substanzgemisch zu verstehen, welches sich zur Ausbildung von Netzwerken zwischen den einzelnen Bestandteilen der Pflanzsubstrate eignet. Insbesondere ermöglicht das Bindemittel ein Verkleben bzw. Haften der einzelnen Bestandteile der Pflanzsubstrate mit- bzw. aneinander.

Unter feinteiligem Torf soll im Rahmen der vorliegenden Erfindung Torf mit Partikelgrößen von weniger als 10 mm, insbesondere weniger als 5 mm, vorzugsweise weniger als 4 mm verstanden werden. Torfe mit diesen Partikelgrößen eignen sich im Regelfall nur für spezielle Anwendungen als Kultur- bzw. Pflanzsubstrate im Erwerbsgartenbau und lassen sich mit den weiteren Bestandteilen, wie beispielsweise Ausgangs- und Zuschlagsstoffen, nur schwer oder gar nicht zu homogenen Pflanz- bzw. Kultursubstraten verarbeiten. Eine breite Anwendung war folglich bislang für diese Größenfraktionen des Torfs im Gartenbau nicht möglich.

Im Rahmen der vorliegenden Erfindung wird feinen Torfen bzw. Torffraktionen die Festigkeit verliehen, die bei der manuellen oder maschinellen Umsetzung der Setzlinge notwendig ist. Das Bindemittel beeinträchtigt die Wasseraufnahme der Substratmischung nicht und hat keine Auswirkung auf das Pflanzenwachstum; so wird beispielsweise die Bewurzelung nicht beeinträchtigt. Vorzugsweise ist das verwendete Bindemittel industriell kompostierbar oder allgemein biologisch abbaubar. Eine Anhaftung an die Wandungen der zumeist aus Kunststoff bestehenden Trays oder Pflanztöpfe erfolgt nicht, d. h. die Substrat-Plugs können rückstandsfrei entfernt bzw. umgesetzt werden.

Die Einarbeitung des Bindemittels bzw. der Bindemittelzusammensetzung ist beim Hersteller der Substratmischungen mit bestehender Anlagen- und Maschinentechnik ohne großen Investitionsaufwand möglich. Eingebracht werden kann das Bindemittel bzw. die Bindemittelzusammensetzung beispielsweise mittels einer Mischtrommel oder durch Aufsprühen des Bindemittels mittels Düsen während des Transportes der Substratmischung über Förderbänder.

Im Rahmen der vorliegenden Erfindung kann somit vorgesehen sein, dass bei der Durchführung des Verfahrens die Partikelgröße der Substratmischung erhöht wird. Dies geschieht, indem die Teilchen der Substratmischung durch das Bindemittel zu größeren Agglomeraten verbunden werden.

Im Allgemeinen bilden die Partikel der Substratmischung mit dem abgebundenen Bindemittel ein Netzwerk aus. Die Ausbildung von derartigen Netzwerken erlaubt zum einen eine gezielte Einstellung der Teilchengröße der einzelnen Agglomerate der Pflanz- bzw. Kultursubstrate sowie zum anderen die Bereitstellung von hochporösen Formkörpern. Die Ausbildung der Netzwerke ermöglicht eine maschinelle oder manuelle Umsetzung der Setzlinge mit den Substrat-Plugs in größere Pflanzentrays bzw. Pflanzengefäße.

Unter einem Pflanzentray werden im Rahmen der vorliegenden Erfindung Pflanzpaletten zur Aufzucht von Pflanzen, insbesondere von Setzlingen verstanden, welche aus einer Vielzahl von miteinander verbundenen Pflanzgefäßen bestehen.

Das poröse durchlässige Netzwerk, welches sich im Allgemeinen aus den Partikeln der Substratmischung sowie dem abgebundenen Bindemittel bildet, behindert - wie zuvor bereits ausgeführt - das Wurzelwachstum der Setzlinge nicht. Die Netzwerke halten moderaten mechanischen Belastungen stand, wie sie beispielsweise beim Umsetzen der Setzlinge in größere Pflanzentrays auftreten, jedoch können die einzelnen Agglomerate problemlos voneinander getrennt und vereinzelt werden.

Besonders gute Ergebnisse werden im Rahmen der vorliegenden Erfindung erhalten, wenn die Mischung aus Pflanzsubstrat und Bindemittelzusammensetzung in eine Matrize, insbesondere in Pflanzentrays, überführt wird und das Bindemittel anschließend abbinden gelassen wird.

Im Rahmen der vorliegenden Erfindung wird dabei unter einer Matrize eine Form verstanden, in welche die Mischung aus Pflanzsubstrat und Bindemittelzusammensetzung eingefüllt wird. Durch einfaches Abbindenlassen des Bindemittels, beispielsweise durch Entfernung des Dispersions- oder Lösemittels bei Verwendung von dispersions- oder lösemittelbasierenden Klebstoffen als Bindemittel, können im Rahmen der vorliegenden Erfindung hochporöse, wasseraufnahmefähige dreidimensionale Netzwerke in Form von Formkörpern erhalten werden, welche sich in hervorragender Weise zur Aufzucht von Pflanzen bzw. Setzlingen eignen.

Gemäß einer besonders bevorzugten Ausführungsform der vorliegenden Erfindung wird das Verfahren zur Nutzbarmachung von feinteiligem Torf, insbesondere das Verfahren zur Verbesserung der Festigkeit von Pflanzsubstraten, derart durchgeführt, dass in einem ersten Verfahrensschritt (a) eine Torf enthaltende Substratmischung mit mindestens einer Bindemittelzusammensetzung versetzt wird, optional in einem nachfolgenden Verfahrensschritt (b) die Mischung aus Pflanzsubstrat und Bindemittelzusammensetzung in eine Matrize, insbesondere in Pflanzentrays, überführt wird und in einem wiederum nachfolgenden Verfahrensschritt (c) das Bindemittel anschließend abbinden gelassen wird.

Wenn im Rahmen der vorliegenden Erfindung die Mischung aus Pflanzsubstrat und Bindemittelzusammensetzung in eine Matrize überführt wird, so werden besonders gute Ergebnisse erhalten, wenn das Überführen der Mischung aus Bindemittelzusammensetzung und Pflanzsubstrat, insbesondere in Verfahrensschritt (b), unter Anwendung von Druck oder druckfrei, vorzugsweise druckfrei, durchgeführt wird.

Im Rahmen der vorliegenden Erfindung können somit hochporöse dreidimensionale Netzwerke in Form von Formkörpern erhalten werden, ohne dass ein Verpressen des Substrates erfolgen müsste, was zu einer deutlich geringeren Porosität führen würde.

Im Allgemeinen ist es im Rahmen der vorliegenden Erfindung vorgesehen, dass das Versetzen des Pflanzsubstrates mit der Bindemittelzusammensetzung in einem Extruder, einer Mischtrommel und/oder durch Besprühen des Pflanzsubstrates mit der Bindemittelzusammensetzung erfolgt. In diesem Zusammenhang werden besonders gute Ergebnisse erhalten, wenn das Pflanzsubstrat erst mit der Bindemittelzusammensetzung besprüht wird und anschließend eine nochmalige Durchmischung des Gemisches, insbesondere in einer Mischtrommel, vorgenommen wird. Das erfindungsgemäße Verfahren hat den Vorteil, dass derartige Mischtrommeln bzw. Sprüheinrichtungen bei den Herstellern von Pflanz- bzw. Kultursubstraten oftmals bereits vorhanden sind. Das erfindungsgemäße Verfahren lässt sich somit problemlos auf den bereits vorhandenen Vorrichtungen der Substrathersteller durchführen, weshalb diese keine weiteren bzw. zusätzlichen Investitionen und Kosten tragen oder gegebenenfalls die bestehenden Anlagen und Maschinen nur geringfügig modifizieren müssen. Auf die zuvor beschriebene Weise lassen sich sowohl dreidimensionale Formkörper in Pflanzentrays herstellen als auch grobkörnige Pflanz- bzw. Kultursubstrate, wie beispielsweise Blumenerde.

Das erfindungsgemäße Verfahren wird im Allgemeinen bei Raumtemperatur bzw. Umgebungstemperatur durchgeführt. Im Rahmen der vorliegenden Erfindung ist es folglich nicht notwendig, die Bindemittelzusammensetzung, das Bindemittel oder die Substratmischung zu erhitzen, um zu einer dauerhaften Verbindung von Substrat und Bindemittel zu gelangen.

Im Rahmen der vorliegenden Erfindung ist es vorgesehen, dass die Bindemittelzusammensetzung auf Basis einer Dispersion oder Lösung ausgebildet ist. Dabei kann es im Rahmen der vorliegenden Erfindung auch vorgesehen sein, dass nicht nur ein Bindemittel, sondern Bindemittelgemische eingesetzt werden.

Vor dem Hintergrund, dass die Bindemittelzusammensetzung auf Basis einer Dispersion oder Lösung ausgebildet ist, so umfasst die Bindemittelzusammensetzung mindestens ein Dispersions- oder Lösemittel. Erfindungsgemäß ist es vorgesehen, dass das Dispersions- oder Lösemittel Wasser ist. Die Verwendung von Wasser hat den Vorteil, dass das Dispersions- bzw. Lösemittel nicht aufwendig entfernt werden muss, um eine Gefährdung der Umwelt und insbesondere der zu kultivierenden Pflanzen zu vermeiden und gesetzliche Auflagen zu erfüllen. Darüber hinaus wird Wasser als Dispersions- bzw. Lösemittel rasch vom Torfanteil der Substratmischung absorbiert, wodurch es zu einer raschen und dauerhaften Verbindung zwischen Bindemittel und den Partikeln des Pflanzsubstrates kommt.

Je nach Art der insbesondere maschinellen Verarbeitung kann die Bindemittelzusammensetzung in konzentrierter Form oder verdünnt zugegeben werden. Die maximal mögliche Verdünnung ist sehr stark vom gewünschten Mischsystem und von der Art des Pflanzsubstrats abhängig. In Tests hat sich eine Beimengung von 2 Vol.-% auf 1 m³ Torf als vorteilhaft erwiesen.

Im Rahmen der vorliegenden Erfindung hat es sich als vorteilhaft erwiesen, wenn die Bindemittelzusammensetzung das Dispersions- oder Lösemittel in Mengen von 60 bis 99,9 Gew.-%, insbesondere 75 bis 99,8 Gew.-%, vorzugsweise 85 bis 99,5 Gew.-%, bevorzugt 90 bis 99,2 Gew.-%, besonders bevorzugt 95 bis 99 Gew.-%, bezogen auf die Bindemittelzusammensetzung, enthält. Im Rahmen der vorliegenden Erfindung werden somit vorzugsweise stark verdünnte Dispersionen bzw. Lösungen von Bindemitteln eingesetzt, d. h. der Feststoffgehalt der Bindemittelzusammensetzung ist äußerst gering, wodurch eine hohe Porosität des Pflanzsubstrates gewährleistet wird.

Im Rahmen der vorliegenden Erfindung ist es darüber hinaus vorgesehen, dass die Bindemittelzusammensetzung einen Feststoffgehalt von 0,2 bis 25 Gew.-%, vorzugsweise 0,5 bis 15 Gew.-%, bevorzugt 0,8 bis 10 Gew.-%, bevorzugt 1 bis 5 Gew.-%, bezogen auf die Bindemittelzusammensetzung, aufweist. Unter dem Begriff "Feststoffgehalt" soll im Rahmen der vorliegenden Erfindung der Gewichtsanteil der Bindemittelzusammensetzung verstanden werden, welcher nach Entfernung sämtlicher Dispersions- bzw. Lösemittel verbleibt.

Wenn die Bindemittelzusammensetzung auf Basis einer Dispersion bzw. Lösung ausgebildet ist, so enthält die Bindemittelzusammensetzung erfindungsgemäß mindestens einen Klebstoff auf Basis eines organischen Klebstoffpolymers als Bindemittel. Erfindungsgemäß ist es vorgesehen, dass der Klebstoff ein Dispersionsklebstoff ist. Dispersionsklebstoffe sind üblicherweise nichtreaktive Klebstoffe, welche auf rein physikalischem Wege durch Entfernung des Dispersions- bzw. des Lösemittels abbinden und klebrig werden.

Erfindungsgemäß ist im Rahmen der vorliegenden Erfindung der Klebstoff bzw. das Klebstoffpolymer ausgewählt aus der Gruppe von Polyurethanen (PU), Polylactiden (PLA), Acrylaten, Chloropren, Vinylacetat-Ethylen-Copolymeren (VAE), Polyvinylalkoholen (PVOH) und Polyvinylacetaten (PVAc), insbesondere Vinylacetat-Ethylen-Copolymeren (VAE), Polylactiden (PLA) und/oder Polyurethanen (PU), bevorzugt Polylactiden (PLA) und/oder Polyurethanen (PU), vorzugsweise Polyurethanen (PU).

Was die Menge an Klebstoff in der erfindungsgemäß eingesetzten Bindemittelzusammensetzung anbelangt, so kann diese naturgemäß in weiten Bereichen variieren. Besonders gute Ergebnisse werden im Rahmen der vorliegenden Erfindung jedoch erhalten, wenn die Bindemittelzusammensetzung den Klebstoff in Mengen von 0,05 bis 40 Gew.-%, insbesondere 0,15 bis 25 Gew.-%, vorzugsweise 0,3 bis 15 Gew.-%, bevorzugt 0,5 bis 10 Gew.-%, besonders bevorzugt 0,5 bis 5 Gew.-%, bezogen auf die Bindemittelzusammensetzung, enthält.

Darüber hinaus kann es im Rahmen der vorliegenden Erfindung vorgesehen sein, dass die Bindemittelzusammensetzung mindestens ein Additiv, ausgewählt aus der Gruppe von Rheologiemodifikatoren, Viskositätsregulatoren, Verdickungsmitteln sowie deren Mischungen und Kombinationen aufweist. Überraschenderweise lässt sich durch gezielte Auswahl der zuvor genannten Komponenten der Festigkeitsaufbau sowie die Endfestigkeit der verfestigten Pflanzsubstrate entscheidend verbessern, wobei die Bindemittelzusammensetzung, insbesondere die Bindemitteldispersion bzw. Bindemittellösung, immer noch niedrigviskos, insbesondere sprühfähig bleibt. Darüber hinaus verbessert die Verwendung der vorgenannten Komponenten auf Basis natürlicher bzw. modifizierter natürlicher Produkte die biologische Abbaubarkeit des Bindemittels nochmals.

Falls die Bindemittelzusammensetzung mindestens ein Additiv ausgewählt aus der Gruppe von Rheologiemodifikatoren, Viskositätsregulatoren, Verdickungsmitteln sowie deren Mischungen in Kombination aufweist, so hat es sich bewährt, wenn das Additiv ausgewählt ist aus der Gruppe von Metallseifen, modifizierten Fettderivaten, Stärken, insbesondere modifizierten Stärken, Cellulosen, insbesondere modifizierten Cellulosen, vorzugsweise Hydroxyethylcellulose, Carboxymethylcellulose, Hydroxypropylmethylcellulose, Hydroxypropylcellulose, Ethylhydroxyethylcellulose, Polyvinylalkoholen, Polyl(meth)acrylaten, Polyacrylamiden, Polyvinylpyrrolidon, Polyethylenglycolen, Polyamiden sowie deren Mischungen und Kombinationen.

Besonders gute Ergebnisse werden erhalten, wenn das Additiv ausgewählt ist aus Stärken und/oder Cellulosen, vorzugsweise modifizierten Stärken und/oder modifizierten Cellulosen, bevorzugt kaltwasserlöslichen Stärken. Kaltwasserlösliche Stärken quellen bereits in kaltem Wasser auf bzw. lösen sich in diesem. Eine Erhöhung der Temperatur bzw. die Zufuhr von Energie ist nicht notwendig, um Dispersionen bzw. Lösungen kaltwasserlöslicher Stärke zu erhalten. Modifizierte Stärken werden durch physikalische, enzymatische oder chemische Umsetzung aus natürlichen Stärken gewonnen, um gezielt Eigenschaften der Stärke, wie beispielsweise die Quellfähigkeit in kalten Lösungs- bzw. Dispersionsmedien sowie eine Verbesserung der Beständigkeit gegenüber Hitze, Kälte oder pH-Änderungen einzustellen. Physikalisch modifizierte Stärke ist beispielsweise durch Erhitzung nativer Stärke zugänglich, während chemisch modifizierte Stärke beispielsweise durch Umsetzung von natürlicher Stärke mit Säuren oder Laugen bzw. durch Veresterung, beispielsweise mit Anhydriden oder Phosphaten, erhalten wird.

Überraschenderweise hat sich bei den Untersuchungen der Anmelderin gezeigt, dass der Zusatz der vorgenannten Additive zu der erfindungsgemäß eingesetzten Bindemittelzusammensetzung die Viskosität der Bindemittelzusammensetzung in weiten Bereichen nicht negativ beeinflusst, d. h. trotz eines höheren Anteils an Rheologiemodifikatoren, Viskositätsregulatoren und/oder Verdickungsmitteln, bleibt die Mischung niedrigviskos. Dies gilt insbesondere bei Zusatz modifizierter Stärken, insbesondere kaltwasserlöslicher Stärken. Insbesondere wurde gefunden, dass eine Kombination aus Polyurethan-Dispersionen in Kombination mit kaltwasserlöslichen Stärken zu einem überdurchschnittlichen Festigkeitsaufbau führt, geringe Viskositäten aufweist, insbesondere sprühfähig ist, und in nahezu beliebigen Verhältnissen mit Wasser verdünnt werden kann.

Die verwendeten Bindemittelzusammensetzungen weisen eine erhöhte Anfangsfestigkeit, einen schnellen Festigkeitsaufbau sowie eine überlegene Endfestigkeit der Pflanzsubstrate auf.

Ein weiterer Vorteil von Stärken, wie beispielsweise modifizierten Stärken, ist, dass sie biologisch abbaubar und industriell kompostierbar sind, d. h. die Verwendung von Stärken in der erfindungsgemäße verwendeten Bindemittelzusammensetzung erhöht die biologische Abbaubarkeit der Bindemittelzusammensetzung erheblich. Für Polyurethan-Dispersionen - ohne Additivzusatz - konnte nach 90 Tagen ein Abbau von bis zu 74 % oder mehr nachgewiesen werden, d.h. eine Kombination von Polyurethan-Dispersionen und biologisch abbaubaren Additiven führt zu biologisch abbaubaren und industriell kompostierbaren Bindemitteln. Bindemittelzusammensetzungen auf Basis von Polylactiden und Stärken sind aufgrund der üblicherweise gegebenen biologischen Abbaubarkeit der Polylactide rasch unter industriellen Bedingungen kompostierbar.

Wenn die Bindemittelzusammensetzung ein Additiv aus der Gruppe von Rheologiemodifikatoren, Viskositätsregulatoren, Verdickungsmitteln sowie deren Mischungen und Kombination aufweist, so kann die Menge des Additivs in weiten Bereichen variieren. Im Rahmen der vorliegenden Erfindung werden jedoch besonders gute Ergebnisse erhalten, wenn die Bindemittelzusammensetzung das Additiv in Mengen von 0,05 bis 30 Gew.-%, insbesondere 0,02 bis 20 Gew.-%, vorzugsweise 0,1 bis 10 Gew.-%, bevorzugt 0,3 bis 5 Gew.-%, besonders bevorzugt 0,5 bis 3 Gew.-%, bezogen auf die Bindemittelzusammensetzung, enthält.

Auch das Verhältnis von Klebstoff zu Additiv, ausgewählt aus der Gruppe von Rheologiemodifikatoren, Viskositätsregulatoren, Verdickungsmitteln sowie deren Mischungen und Kombination, kann im Rahmen der Erfindung in weiten Bereichen variieren. Es hat sich jedoch als besonders vorteilhaft erwiesen, wenn die Bindemittelzusammensetzung den Klebstoff und das Additiv in einem gewichtsbezogenen Verhältnis von 5 : 1 bis 1 : 5, insbesondere 4 : 1 bis 1 : 3, vorzugsweise 3,5 : 1 bis 1 : 2, bevorzugt 3 : 1 bis 1 : 1,5, besonders bevorzugt 2,5 : 1 bis 1 : 1, bezogen auf den Feststoffgehalt der Bindemittelzusammensetzung, enthält. In den vorgenannten Verhältnissen von Klebstoff zu Additiv werden besonders gute Anfangs- und Endfestigkeiten der Pflanzsubstrate erzielt.

Darüber hinaus kann es im Rahmen der vorliegenden Erfindung vorgesehen sein, dass die Bindemittelzusammensetzung außerdem mindestens ein weiteres Additiv und/oder mindestens einen weiteren Hilfsstoff enthält.

Falls die Bindemittelzusammensetzung weitere Additive bzw. Hilfsstoffe enthält, so hat es sich bewährt, wenn das weitere Additiv und/oder der weitere Hilfsstoff aus der Gruppe von Dispergierhilfsmitteln, Emulgatoren, Netzmitteln, Füllstoffen, Entschäumern, Farbstoffen, Färbemitteln, Vergilbungsinhibitoren, Antioxidationsmitteln, Stabilisatoren, Konservierungsmitteln, UV-Absorbern, UV-Stabilisatoren, Verlaufsmitteln, pH-Stellmitteln, Schutzkolloiden sowie deren Mischungen und Kombinationen ausgewählt ist. Es handelt sich hierbei um übliche Hilfsadditive bzw. Hilfsstoffe, welche die Bindemittelzusammensetzung in Mengen von 0,01 bis 25 Gew.-%, insbesondere 0,01 bis 15 Gew.-%, vorzugsweise 0,1 bis 10 Gew.-%, bevorzugt 0,5 bis 10 Gew.-%, bezogen auf das Bindemittelzusammensetzung, enthalten kann.

Gemäß einer besonderen Ausführungsform der vorliegenden Erfindung weist die Bindemittelzusammensetzung einen pH-Wert im Bereich von 4,0 bis 10,5, insbesondere 5,0 bis 10,0, vorzugsweise 6,0 bis 9,5, bevorzugt 7,0 bis 9,3, besonders bevorzugt 7,5 bis 9,0, auf.

Erfindungsgemäß weist die Bindemittelzusammensetzung eine Brookfield-Viskosität bei 20 °C im Bereich von 20 bis 1.500 mPas, vorzugsweise 50 bis 1.000 mPas, bevorzugt 70 bis 800 mPas, besonders bevorzugt 90 bis 600 mPas, ganz besonders bevorzugt 100 bis 400 mPas, auf. Gleichfalls kann es im Rahmen der vorliegenden Erfindung vorgesehen sein, dass die Bindemittelzusammensetzung sprühfähig ausgebildet ist.

Mit Viskositäten im vorgenannten Bereich wird eine breite Anwendbarkeit der erfindungsgemäß eingesetzten Bindemittelzusammensetzungen gewährleistet, wobei sich die erfindungsgemäß eingesetzten Bindemittelzusammensetzungen üblicherweise auch für einen Sprühauftrag, das heißt eine besonders gleichmäßige Benetzung der Pflanzsubstrate, eignen. Bindemittelzusammensetzungen mit Viskositäten im vorgenannten Bereich sind von den Herstellern von Kultur- bzw. Pflanzsubstraten mit üblichen Maschinen bzw. Vorrichtungen beherrschbar, welche darüber hinaus im Regelfall bereits in die jeweiligen Anlagen integriert sind, d. h. von den Herstellern bereits genutzt werden. Die Einarbeitung des Bindemittels bzw. der Bindemittelzusammensetzung erfolgt beim Hersteller der Substratmischungen folglich ohne großen Aufwand mit bestehender Anlagen- und Maschinentechnik und ohne großen Investitionsaufwand.

Weiterer Gegenstand der vorliegenden Erfindung - gemäß einem **zweiten** Aspekt der vorliegenden Erfindung - ist eine Bindemittelzusammensetzung in Form einer Dispersion oder Lösung zur Verfestigung von Pflanzsubstraten. Die Bindemittelzusammensetzung zeichnet sich dadurch aus, dass
(a) mindestens ein Dispersions- oder Lösemittel, wobei das Dispersions- oder Lösemittel Wasser ist,
(b) mindestens einen Klebstoff, wobei der Klebstoff ausgewählt ist aus der Gruppe von Polyurethanen (PU), Polylactiden (PLA), Acrylaten, Chloropren, Vinylacetat-Ethylen-Copolymeren (VAE), Polyvinylalkoholen (PVOH) und Polyvinylacetaten (PVAc), und
(c) mindestens ein Additiv ausgewählt aus der Gruppe von Rheologiemodifikatoren, Viskositätsregulatoren, Verdickungsmitteln sowie deren Mischungen und Kombinationen
enthält, wobei die Bindemittelzusammensetzung einen Feststoffgehalt von 0,2 bis 25 Gew.-%, bezogen auf die Bindemittelzusammensetzung, aufweist und wobei die Bindemittelzusammensetzung eine Brookfield-Viskosität bei 20 °C im Bereich von 20 bis 1.500 mPas, aufweist.

Mit der erfindungsgemäßen Bindemittelzusammensetzung werden im Rahmen der vorliegenden Erfindung besonders feste Verklebungen, insbesondere besonders hohe Festigkeiten der Pflanzsubstrate, bei gleichzeitig guter Anfangs- und Endfestigkeit erreicht.

Was die Viskosität der Bindemittelzusammensetzung anbelangt, so kann diese naturgemäß in weiten Bereichen variieren. Im Rahmen der vorliegenden Erfindung weist die Bindemittelzusammensetzung bei 20 °C eine Brookfield Viskosität im Bereich von 20 bis 1.500 mPas, vorzugsweise 50 bis 1.000 mPas, bevorzugt 70 bis 800 mPas, besonders bevorzugt 90 bis 600 mPas, ganz besonders bevorzugt 100 bis 400 mPas, aufweist. Wie zuvor bereits erwähnt, gewährleistet eine Viskosität der Bindemittelzusammensetzung in den zuvor genannten Bereichen eine universelle Einsetzbarkeit der erfindungsgemäßen Bindemittelzusammensetzung.

Im Allgemeinen ist es im Rahmen der vorliegenden Erfindung vorgesehen, dass die Bindemittelzusammensetzung sprühfähig ausgebildet ist.

Gemäß einer bevorzugten Ausführungsform weist die Bindemittelzusammensetzung ein gewichtsbezogenes Verhältnis von Klebstoff (b) zu Additiv (c) im Bereich von 5 : 1 bis 1 : 5, insbesondere 4 : 1 bis 1 : 3, vorzugsweise 3,5 : 1 bis 1 : 2, bevorzugt 3 : 1 bis 1 : 1,5, besonders bevorzugt 2,5 : 1 bis 1 : 1, bezogen auf den Feststoffgehalt der Bindemittelzusammensetzung, auf. Insbesondere in den zuvor genannten Mengenverhältnissen wird eine synergistische Wirkung zwischen Klebstoff und Additiv beobachtet, welche bei Verwendung kleiner Mengen Klebstoff und Additiv zu einer hohen Festigkeit der Pflanzsubstrate, insbesondere zu hohen Anfangs- und Endfestigkeiten sowie einem hohen Festigkeitsaufbau führt, ohne jedoch Pflanzenwachstum und Bewurzelung negativ zu beeinträchtigen.

Für die erfindungsgemäße Bindemittelzusammensetzung ist als Lösemittel oder Dispersionsmittel (a) Wasser eingesetzt. Die Verwendung von Wasser als Lösemittel vermeidet die bei organischen Lösemitteln übliche aufwendige Rezyklierung, insbesondere die Wiedergewinnung, Sammlung und kostenintensive Entsorgung des Lösemittels. Darüber hinaus wird das Wasser üblicherweise einfach von dem sehr wasseraufnahmefähigen Torfbestandteil absorbiert, weshalb das Bindemittel rasch seine vernetzende Wirkung entfaltet.

Im Rahmen der vorliegenden Erfindung hat es sich weiterhin als vorteilhaft erwiesen, wenn die Bindemittelzusammensetzung das Dispersions- oder Lösemittel (a) in Mengen von 60 bis 99,9 Gew.-%, insbesondere 75 bis 99,8 Gew.-%, vorzugsweise 85 bis 99,5 Gew.-%, bevorzugt 90 bis 99,2 Gew.-%, besonders bevorzugt 95 bis 99 Gew.-%, bezogen auf die Bindemittelzusammensetzung, enthält. Im Rahmen der vorliegenden Erfindung werden somit Bindemittelzusammensetzungen mit einem nur sehr geringen Feststoffgehalt zur Anwendung gebracht.

Was den Feststoffgehalt der Bindemittelzusammensetzung anbelangt, so kann dieser in weiten Bereichen variieren. Erfindungsgemäß weist die Bindemittelzusammensetzung einen Feststoffgehalt von 0,2 bis 25 Gew.-%, vorzugsweise 0,5 bis 15 Gew.-%, bevorzugt 0,8 bis 10 Gew.-%, besonders bevorzugt 1 bis 5 Gew.-%, bezogen auf die Bindemittelzusammensetzung, aufweist.

Im Rahmen der vorliegenden Erfindung ist der Klebstoff (b) ausgewählt aus der Gruppe von Polyurethanen (PU), Polylactiden (PLA), Acrylaten, Chloropren, Vinylacetat-Ethylen-Copolymeren (VAE), Polyvinylalkoholen (PVOH) und Polyvinylacetaten (PVAc), insbesondere Vinylacetat-Ethylen-Copolymeren (VAE), Polylactiden (PLA) und/oder Polyurethanen (PU), bevorzugt Polylactiden (PLA) und/oder Polyurethanen (PU), vorzugsweise Polyurethanen (PU).

Was die Menge des Klebstoffs (b) in der Bindemittelzusammensetzung anbelangt, so kann dies in weiten Bereichen variieren. Es hat sich jedoch bewährt, wenn die Bindemittelzusammensetzung den Klebstoff in Mengen von 0,05 bis 30 Gew.-%, insbesondere 0,02 bis 20 Gew.-%, vorzugsweise 0,1 bis 15 Gew.-%, bevorzugt 0,3 bis 10 Gew.-%, besonders bevorzugt 0,5 bis 5 Gew.-%, bezogen auf die Bindemittelzusammensetzung, enthält.

Gemäß einer bevorzugten Ausführungsform der vorliegenden Erfindung ist das Additiv (c) ausgewählt aus der Gruppe von Metallseifen, modifizierten Fettderivaten, Stärken, insbesondere modifizierten Stärken, Cellulosen, insbesondere modifizierten Cellulosen, vorzugsweise Hydroxyethylcellulose, Carboxymethylcellulose, Hydroxypropylmethylcellulose, Hydroxypropylcellulose, Ethylhydroxyethylcellulose, Polyvinylalkoholen, Poly(meth)acrylaten, Polyacrylamiden, Polyvinylpyrrolidon, Polyethylenglycolen, Polyamiden sowie deren Mischungen und Kombinationen. Hierbei wird es insbesondere bevorzugt, wenn das Additiv (c) ausgewählt ist aus Stärken und/oder Cellulosen, vorzugsweise modifizierten Stärken und/oder modifizierten Cellulosen, bevorzugt kaltwasserlöslichen Stärken.

Darüber hinaus werden im Rahmen der vorliegenden Erfindung besonders gute Ergebnisse erhalten, wenn die Bindemittelzusammensetzung das Additiv (c) in bestimmten Mengen enthält. Es hat sich dabei als vorteilhaft erwiesen, wenn die Bindemittelzusammensetzung das Additiv (c) in Mengen von 0,05 bis 30 Gew.-%, insbesondere 0,02 bis 20 Gew.-%, vorzugsweise 0,1 bis 10 Gew.-%, bevorzugt 0,3 bis 5 Gew.-%, besonders bevorzugt 0,5 bis 3 Gew.-%, bezogen auf die Bindemittelzusammensetzung, enthält.

Im Allgemeinen enthält die Bindemittelzusammensetzung außerdem mindestens ein weiteres Additiv und/oder mindestens einen weiteren Hilfsstoff (d).

Wenn die Bindemittelzusammensetzung ein weiteres Additiv bzw. einen weiteren Hilfsstoff (d) enthält, so hat es sich als vorteilhaft erwiesen, wenn das weitere Additiv und/oder der weitere Hilfsstoff (d) aus der Gruppe von Dispergierhilfsmitteln, Emulgatoren, Netzmitteln, Füllstoffen, Entschäumern, Farbstoffen, Färbemitteln, Vergilbungsinhibitoren, Antioxidationsmitteln, Stabilisatoren, Konservierungsmitteln, UV-Absorbern, UV-Stabilisatoren, Verlaufsmitteln, pH-Stellmitteln, Schutzkolloiden sowie deren Mischungen und Kombinationen ausgewählt ist.

Gemäß einer besonderen Ausführungsform der vorliegenden Erfindung liegt die Bindemittelzusammensetzung in Form eines Bindemittelkonzentrates vor, welches an den Anwender geliefert wird und erst unmittelbar vor Anwendung mit weiterem Dispersions- bzw. Lösemittel gemischt wird, um zur Anwendungskonzentration zu gelangen. Auf diese Weise werden Lager- und Transportkosten gespart, da deutlich weniger Substanz befördert und gelagert werden muss.

Wenn die Bindemittelzusammensetzung in Form eines Bindemittelkonzentrates vorliegt, so enthält die Bindemittelzusammensetzung das Dispersions- oder Lösemittel üblicherweise in Mengen von 10 bis 90 Gew.-%, insbesondere 30 bis 90 Gew.-%, vorzugsweise 40 bis 85 Gew.-%, bevorzugt 50 bis 80 Gew.-%, besonders bevorzugt 60 bis 75 Gew.-%, bezogen auf die Bindemittelzusammensetzung.

Wenn die erfindungsgemäße Bindemittelzusammensetzung als Bindemittelkonzentrat vorliegt, so weist die Bindemittelzusammensetzung üblicherweise einen Feststoffgehalt von 10 bis 90 Gew.-%, insbesondere 10 bis 70 Gew.-%, vorzugsweise 15 bis 60 Gew.-%, bevorzugt 20 bis 50 Gew.-%, besonders bevorzugt 25 bis 40 Gew.-%, bezogen auf die Bindemittelzusammensetzung, auf.

Mit den zuvor genannten Gehalten an Lösemittel bzw. Dispersionsmittel sowie Feststoff werden lagerstabile Bindemittelkonzentrate bereitgestellt, welche vor Anwendung nahezu beliebig verdünnt werden können und selbst als Konzentrate noch sprühfähig sind.

Darüber hinaus ist es für den Fall, dass die erfindungsgemäße Bindemittelzusammensetzung in Form eines Bindemittelkonzentrates vorliegt, vorgesehen, dass das Bindemittel den Klebstoff (b) in Mengen von 10 bis 90 Gew.-%, insbesondere 12 bis 70 Gew.-%, vorzugsweise 12 bis 50 Gew.-%, bevorzugt 14 bis 35 Gew.-%, besonders bevorzugt 15 bis 25 Gew.-%, bezogen auf die Bindemittelzusammensetzung, enthält.

Was wiederum den Anteil des Additivs (c) in der erfindungsgemäßen Bindemittelzusammensetzung, für den Fall, dass die Bindemittelzusammensetzung als Bindemittelkonzentrat vorliegt, anbelangt, so kann dieser naturgemäß in weiten Bereichen variieren. Es hat sich jedoch als vorteilhaft erwiesen, wenn das Bindemittelkonzentrat das Additiv (c) in Mengen von 6 bis 70 Gew.-%, insbesondere 8 bis 45 Gew.-%, vorzugsweise 8 bis 35 Gew.-%, bevorzugt 10 bis 25 Gew.-%, besonders bevorzugt 10 bis 15 Gew.-%, bezogen auf die Bindemittelzusammensetzung, enthält.

Wenn die Bindemittelzusammensetzung als Konzentrat vorliegt, so unterscheiden sich üblicherweise die Viskositäten des Konzentrats von den des anwendungsbereiten Bindemittels. Im Allgemeinen weist die Bindemittelzusammensetzung - für den Fall, das die Bindemittelzusammensetzung als Bindemittelkonzentrat vorliegt - eine Brookfield-Viskosität bei 20 °C im Bereich von 50 bis 20.000 mPas, insbesondere 100 bis 10.000 mPas, vorzugsweise 200 bis 5.000 mPas auf. In den genannten Viskositätsbereichen ist die erfindungsgemäße Bindemittelzusammensetzung zumindest im unteren Viskositätsbereich sprühfähig und lässt sich über den gesamten Viskositätsbereich hervorragend verarbeiten und gezielt verdünnen.

Üblicherweise weist die Bindemittelzusammensetzung - unabhängig davon, ob sie in verdünnter Form oder als Konzentrat vorliegt - einen pH-Wert im Bereich von 4,0 bis 10,5, insbesondere 5,0 bis 10,0, vorzugsweise 6,0 bis 9,5, bevorzugt 7,0 bis 9,3, besonders bevorzugt 7,5 bis 9,0, aufweist.

Für weitere Einzelheiten zu der erfindungsgemäßen Bindemittelzusammensetzung kann auf die vorangehenden Ausführungen zu dem erfindungsgemäßen Verfahren verwiesen werden, welche in Bezug auf die erfindungsgemäße Bindemittelzusammensetzung entsprechend gelten.

Wiederum weiterer Gegenstand der vorliegenden Erfindung - gemäß einem **dritten** Aspekt der vorliegenden Erfindung - ist die Verwendung der zuvor beschriebenen Bindemittelzusammensetzung zur Nutzbarmachung von feinteiligem Torf, insbesondere zur Verfestigung von Pflanzsubstraten.

Für weitere Einzelheiten zu diesem Erfindungsaspekt kann auf die vorangehenden Ausführungen zu den übrigen Erfindungsaspekten verwiesen werden, welche in Bezug auf die erfindungsgemäße Verwendung entsprechend gelten.

Wiederum weiterer Gegenstand der vorliegenden Erfindung - gemäß einem **vierten** Aspekt der vorliegenden Erfindung - ist ein Pflanzsubstrat, welches mit dem erfindungsgemäßen Verfahren erhältlich ist.

Torfsubstrate besitzen üblicherweise eine Restfeuchte von ca. 50 bis 60 %. Mit der Zugabe der Bindemittelzusammensetzung wird der Feuchteanteil üblicherweise weiter erhöht. Der Torf kann anschließend etwas zurückgetrocknet werden, was jedoch meistens nicht beim Substrathersteller erfolgt, sondern erst im erwerbsmäßigen Gartenbau. Prinzipiell sollte der Feuchteanteil in einem zur Anzucht verwendeten Plug nicht unter 50% liegen.

Gleichermaßen ist Gegenstand der vorliegenden Erfindung somit ein Pflanzsubstrat, enthaltend eine Torf enthaltende Substratmischung und mindestens ein abgebundenes Bindemittel.

Üblicherweise enthält das Pflanzsubstrat das abgebundene Bindemittel in Mengen von 0,5 bis 10 Gew.-%, insbesondere 0,8 bis 7 Gew.-%, vorzugsweise 1 bis 5 Gew.-%, bezogen auf das Pflanzsubstrat.

Gemäß einer besonderen Ausführungsform der vorliegenden Erfindung weist das Pflanzsubstrat Partikelgrößen im Bereich von 1 bis 40 mm, insbesondere 2 bis 35 mm, vorzugsweise 3 bis 30 mm, auf. Die vorgenannten Partikelgrößen des Pflanzsubstrates beziehen sich auf die Partikelgrößen nach Behandlung mit dem Bindemittel bzw. der Bindemittelzusammensetzung, d. h. die vorgenannten Partikelgrößen betreffen die erhaltenen Agglomerate des Pflanzsubstrats. Die Größe der Substratpartikel kann durch übliche Verfahren, beispielsweise durch Siebanalyse oder optische Verfahren, wie die dynamische Bildanalyse, bestimmt werden.

Üblicherweise weist die Substratmischung, welche zur Herstellung des erfindungsgemäßen Pflanzsubstrates verwendet wird, mindestens einen feinteiligen Torf auf. Hierbei kann es sein, dass der feinteilige Torf Partikelgrößen im Bereich von 0,01 bis 5 mm, insbesondere 0,05 bis 4 mm, vorzugsweise 0,1 bis 4 mm, aufweist. Torfe mit den vorgenannten Partikelgrößen können üblicherweise nicht zur Herstellung von homogenen Pflanz- bzw. Kultursubstraten verwendet werden, da eine homogene Mischung mit den übrigen Bestandteilen der Substrate nicht möglich ist und derartige Substratmischungen auch nicht die notwendige Festigkeit aufweisen, um eine maschinelle Umsetzung von Setzlingen in Pflanzentrays zu gewährleisten.

Für weitere Einzelheiten zu dem erfindungsgemäßen Pflanzsubstrat kann auf die Ausführungen zu den übrigen Erfindungsaspekten verwiesen werden, welche in Bezug auf das erfindungsgemäße Pflanzsubstrat entsprechend gelten.

Die erfindungsgemäße und zuvor beschriebene Bindemittelzusammensetzung ist zur Herstellung des zuvor beschriebenen Pflanzsubstrates geeignet.

### Ausführungsbeispiele

Im Labormaßstab wurde die Verfestigungsqualität verschiedener Bindemittel für Torfsubstrate auf folgende Weise getestet:

### 1. Herstellung von Bindemittelkonzentraten

Es wurden folgende Bindemittelkonzentrate auf Basis wässriger Dispersionen von Vinylacetat-Ethylen-Copolymeren (VAE) und Polyurethanpolymeren (PU) mit einem Feststoffgehalt von 20 bis 50 Gew.-%, bezogen auf das Bindemittelkonzentrat, hergestellt:

### VAE-Dispersion

| | |
|---|---|
| 95 Gew.-% | VAE-Dispersion (Mowilith DM 105 von Celanese Emulsions) |
| 4,8 Gew.-% | Weichmacher (Triacetin) |
| 0,2 Gew.-% | Konservierungsmittel (Acticide LA 0614 von Thor Chemie) |

### PU-Dispersion

| | |
|---|---|
| 50 Gew.-% | PU-Dispersion (Dispercoll U53 von Bayer Material Science) |
| 49,8 Gew.-% | kaltwasserlösliche Stärke (Tackidex 036S von Roquette, 28,5%ige Lösung), |
| 0,2 Gew.-% | Konservierungsmittel (Acticide LA 0614 von Thor Chemie) |

### 2. Herstellung und Untersuchung des verfestigten Pflanzsubstrates

Die unter 1.) hergestellten Bindemittelkonzentrate wurden mit Wasser in verschiedenen Verhältnissen verdünnt, wobei Mischungen mit Verhältnissen von Bindemittelkonzentrat zu Wasser von 1 : 5, 1 : 10 und 1 : 15 angesetzt wurden.

Jeweils 18 g der so erhaltenen Bindemittelzusammensetzungen wurden in handelsübliche Sprühflaschen überführt und mittels Sprühen auf eine Gesamtmenge von 10 g Torfsubstratmischung aufgebracht. Die auf diese Weise erhaltene Wasser-Torf-Mischung wurde in ein Pflanzgefäß (Tray) überführt und für 48 Stunden ruhen gelassen. Nach 48 Stunden wurde die Festigkeit des Torfs beim Herauslösen aus dem Tray sowie bei einem Fallexperiment aus ca. 25 cm Höhe auf die Labortischplatte bewertet. Zerbrach der Plug beim Herauslösen oder beim Aufprall auf die Tischplatte in Einzelteile, so war die Festigkeit ungenügend.

Zum Vergleich wurden weitere Versuche mit Mischungen aus 18 g Wasser und 10 g Torf durchgeführt.

### VAE-Dispersion

| | |
|---|---|
| Verdünnung 1:5: | Sprühfähig |
| | Falltest nicht bestanden |
| | Kein rückstandsfreies Lösen aus dem Pflanzentray |
| | |
| Verdünnung 1:10: | Sprühfähig |
| | Falltest bestanden |
| | Nahezu rückstandsfreies Lösen aus dem Pflanzentray |
| | |
| Verdünnung 1:15: | Sprühfähig |
| | Falltest nicht bestanden |
| | Rückstandsfreies Lösen aus dem Pflanzentray |

### PU-Dispersion

| | |
|---|---|
| Verdünnung 1:5: | Sprühfähig |
| | Falltest bestanden |
| | Rückstandsfreies Lösen aus dem Pflanzentray |
| | |
| Verdünnung 1:10: | Sprühfähig |
| | Falltest bestanden |
| | Rückstandsfreies Lösen aus dem Pflanzentray |
| | |
| Verdünnung 1:15: | Sprühfähig |
| | Falltest bestanden |
| | Rückstandsfreies Lösen aus dem Pflanzentray |

Vergleichbare Ergebnisse konnten auch mit Bindemittelzusammensetzungen auf Basis von Polylactiden (PLA), Acrylaten, Chloropren, Polyvinylalkoholen (PVOH) und Polyvinylacetaten (PVAc) erhalten, gegebenenfalls unter Zusatz von Rheologiemodifikatoren, wie beispielsweise Stärke.

### Torf-Wasser-Gemisch (Vergleich)

Falltest konnte nicht durchgeführt werden, da der Substrat-Plug bereits bei Entnahme aus dem Pflanzentray zerbricht.

## Patentansprüche

1. Verfahren zur Nutzbarmachung von feinteiligem Torf, insbesondere Verfahren zur Verbesserung der Festigkeit von Pflanzsubstraten,
**dadurch gekennzeichnet,**
**dass** eine Torf enthaltende Substratmischung mit mindestens einer Bindemittelzusammensetzung, enthaltend mindestens ein Bindemittel, versetzt wird, wobei die Bindemittelzusammensetzung auf Basis einer Dispersion oder Lösung ausgebildet ist, wobei das Dispersions- oder Lösemittel Wasser ist, wobei die Bindemittelzusammensetzung mindestens einen Dispersionsklebstoff auf Basis eines organischen Klebstoffpolymers enthält, wobei das Klebstoffpolymer ausgewählt ist aus der Gruppe von Polyurethanen (PU), Polylactiden (PLA), Acrylaten, Chloropren, Vinylacetat-Ethylen-Copolymeren (VAE), Polyvinylalkoholen (PVOH) und Polyvinylacetaten (PVAc), wobei die Bindemittelzusammensetzung einen Feststoffgehalt von 0,2 bis 25 Gew.-%, bezogen auf die Bindemittelzusammensetzung, aufweist und wobei die Bindemittelzusammensetzung eine Brookfield-Viskosität bei 20 °C im Bereich von 20 bis 1.500 mPas aufweist, und
**dass** das Bindemittel anschließend abbinden gelassen wird.

2. Verfahren nach Anspruch 1, **dadurch gekennzeichnet, dass** die Mischung aus Pflanzsubstrat und Bindemittelzusammensetzung in eine Matrize, insbesondere in Pflanzentrays, überführt wird und das Bindemittel anschließend abbinden gelassen wird.

3. Verfahren nach Anspruch 1 oder 2, **dadurch gekennzeichnet, dass** das Überführen der Mischung aus Bindemittelzusammensetzung und Pflanzsubstrat in die Matrize unter Anwendung von Druck oder druckfrei, vorzugsweise druckfrei, durchgeführt wird.

4. Verfahren nach einem der vorangehenden Ansprüche, **dadurch gekennzeichnet, dass** die Bindemittelzusammensetzung das Dispersions- oder Lösemittel in Mengen von 60 bis 99,9 Gew.-%, insbesondere 75 bis 99,8 Gew.-%, vorzugsweise 85 bis 99,5 Gew.-%, bevorzugt 90 bis 99,2 Gew.-%, besonders bevorzugt 95 bis 99 Gew.-%, bezogen auf die Bindemittelzusammensetzung, enthält.

5. Verfahren nach, **dadurch gekennzeichnet, dass** die Bindemittelzusammensetzung den Klebstoff in Mengen von 0,05 bis 40 Gew.-%, insbesondere 0,15 bis 25 Gew.-%, vorzugsweise 0,3 bis 15 Gew.-%, bevorzugt 0,5 bis 10 Gew.-%, besonders bevorzugt 0,5 bis 5 Gew.-%, bezogen auf die Bindemittelzusammensetzung, enthält.

6. Verfahren nach einem der vorangehenden Ansprüche, **dadurch gekennzeichnet, dass** die Bindemittelzusammensetzung eine Brookfield-Viskosität bei 20 °C im Bereich von 50 bis 1.000 mPas, bevorzugt 70 bis 800 mPas, besonders bevorzugt 90 bis 600 mPas, ganz besonders bevorzugt 100 bis 400 mPas, aufweist und/oder dass die Bindemittelzusammensetzung sprühfähig ausgebildet ist.

7. Bindemittelzusammensetzung in Form einer Dispersion oder Lösung zur Verfestigung von Pflanzsubstraten, **dadurch gekennzeichnet, dass** die Bindemittelzusammensetzung
(a) mindestens ein Dispersions- oder Lösemittel, wobei das Dispersions- oder Lösemittel Wasser ist,
(b) mindestens einen Klebstoff, wobei der Klebstoff ausgewählt ist aus der Gruppe von Polyurethanen (PU), Polylactiden (PLA), Acrylaten, Chloropren, Vinylacetat-Ethylen-Copolymeren (VAE), Polyvinylalkoholen (PVOH) und Polyvinylacetaten (PVAc), und
(c) mindestens ein Additiv ausgewählt aus der Gruppe von Rheologiemodifikatoren, Viskositätsregulatoren, Verdickungsmitteln sowie deren Mischungen und Kombinationen
enthält, wobei die Bindemittelzusammensetzung einen Feststoffgehalt von 0,2 bis 25 Gew.-%, bezogen auf die Bindemittelzusammensetzung, aufweist und wobei die Bindemittelzusammensetzung eine Brookfield-Viskosität bei 20 °C im Bereich von 20 bis 1.500 mPas, aufweist.

8. Bindemittelzusammensetzung nach Anspruch 7, **dadurch gekennzeichnet, dass** die Bindemittelzusammensetzung eine Brookfield-Viskosität bei 20 °C im Bereich von 50 bis 1.000 mPas, bevorzugt 70 bis 800 mPas, besonders bevorzugt 90 bis 600 mPas, ganz besonders bevorzugt 100 bis 400 mPas, aufweist und/oder dass die Bindemittelzusammensetzung sprühfähig ausgebildet ist.

9. Bindemittelzusammensetzung nach Anspruch 7 oder 8, **dadurch gekennzeichnet, dass** die Bindemittelzusammensetzung ein gewichtbezogenes Verhältnis von Klebstoff (b) zu Additiv (c) im Bereich von 5 : 1 bis 1 : 5, insbesondere 4 : 1 bis 1 : 3, vorzugsweise 3,5 : 1 bis 1 : 2 bevorzugt 3 : 1 bis 1 : 1,5, besonders bevorzugt 2,5 : 1 bis 1 : 1, bezogen auf den Feststoffgehalt der Bindemittelzusammensetzung, aufweist.

10. Bindemittelzusammensetzung nach einem der Ansprüche 7 bis 9, **dadurch gekennzeichnet, dass** die Bindemittelzusammensetzung den Klebstoff (b) in Mengen von 0,05 bis 30 Gew.-%, insbesondere 0,02 bis 20 Gew.-%, vorzugsweise 0,1 bis 15 Gew.-%, bevorzugt 0,3 bis 10 Gew.-%, besonders bevorzugt 0,5 bis 5 Gew.-%, bezogen auf die Bindemittelzusammensetzung, enthält.

11. Bindemittelzusammensetzung nach einem der Ansprüche 7 bis 10, **dadurch gekennzeichnet, dass** das Additiv (c) ausgewählt ist aus der Gruppe von Metallseifen, modifizierten Fettderivaten, Stärken, insbesondere modifizierten Stärken, Cellulosen, insbesondere modifizierten Cellulosen, vorzugsweise Hydroxyethylcellulose, Carboxymethylcellulose, Hydroxypropylmethylcellulose, Hydroxypropylcellulose, Ethylhydroxyethylcellulose, Polyvinylalkoholen, Polyl(meth)acrylaten, Polyacrylamiden, Polyvinylpyrrolidon, Polyethylenglycolen, Polyamiden sowie deren Mischungen und Kombinationen, insbesondere Stärken und/oder Cellulosen, vorzugsweise modifizierten Stärken und/oder modifizierten Cellulosen, bevorzugt kaltwasserlöslichen Stärken.

12. Bindemittelzusammensetzung nach einem der Ansprüche 7 bis 11, **dadurch gekennzeichnet, dass** die Bindemittelzusammensetzung das Additiv (c) in Mengen von 0,05 bis 30 Gew.-%, insbesondere 0,02 bis 20 Gew.-%, vorzugsweise 0,1 bis 10 Gew.-%, bevorzugt 0,3 bis 5 Gew.-%, besonders bevorzugt 0,5 bis 3 Gew.-%, bezogen auf die Bindemittelzusammensetzung, enthält.

13. Bindemittelzusammensetzung nach einem der Ansprüche 7 bis 12, **dadurch gekennzeichnet, dass** die Bindemittelzusammensetzung in Form eines Bindemittelkonzentrats vorliegt.

14. Verwendung einer Bindemittelzusammensetzung nach einem der Ansprüche 7 bis 13 zur Verfestigung von Pflanzsubstraten, insbesondere zur Nutzbarmachung von feinteiligem Torf.

15. Pflanzsubstrat, erhältlich nach einem der Ansprüche 1 bis 6.

## Claims

1. A method for utilising fine-particle peat, particularly a method for improving the strength of plant substrates,
**characterised in that**
a peat-containing substrate compound with at least one binder composition, containing at least one binder, is displaced, wherein the binder composition is formed on the basis of a dispersion or solution, wherein the dispersion or solvent is water, wherein the binder composition contains at least one dispersion adhesive being based on an organic adhesive polymer, wherein the adhesive polymer is selected from the group of polyurethane (PU), polylactides (PLA), acrylates, chloroprenes, vinyl acetate-ethylene copolymers (VAE), polyvinyl alcohols (PVOH) and polyvinyl acetates (PVAc), wherein the binder composition has a solids content of 0.2 to 25 wt.-%, relating to the binder composition, and wherein the binder composition has a Brookfield viscosity at 20 °C in the range of 20 to 1,500 mPas, and
**in that** the binder is then allowed to set.

2. The method according to claim 1, **characterised in that** the compound of plant substrate and binder composition is transferred into a mould, particularly into plant trays, and the binder is then allowed to set.

3. The method according to claim 1 or 2, **characterised in that** the compound consisting of binder composition and plant substrate is transferred into the moulds under pressure or pressure-free, preferably pressure-free.

4. The method according to one of the preceding claims, **characterised in that** the binder composition contains the dispersing agent or solvent in quantities of 60 to 99.9 wt.-%, particularly 75 to 99.8 wt.-%, preferably 85 to 99.5 wt.-%, more preferably 90 to 99.2 wt.-%, particularly preferably 95 to 99 wt.-%, in relation to the binder composition.

5. The method according to one of the preceding claims, **characterised in that** the binder composition contains the adhesive in quantities of 0.05 to 40 wt.-%, particularly 0.15 to 25 wt.-%, preferably 0.3 to 15 wt.-%, more preferably 0.5 to 10 wt.-%, particularly preferably 0.5 to 5 wt.-%, in relation to the binder composition.

6. The method according to one of the preceding claims, **characterised in that** the binder composition has a Brookfield viscosity at 20 °C in the range of 50 to 1,000 mPas, more preferably 70 to 800 mPas, particularly preferably 90 to 600 mPas, very particularly preferably 100 to 400 mPas, and/or that the binder composition is designed to be sprayable.

7. A binder composition in the form of a dispersant or solution to solidify plant substrates, **characterised in that** the binder composition
(a) contains at least one dispersing agent or solvent, wherein the dispersing agent or solvent is water,
(b) at least one adhesive, wherein the adhesive is selected from the group of polyurethanes (PU), polylactides (PLA), acrylates, chloroprenes, vinyl acetate-ethylene copolymers (VAE), polyvinyl alcohol (PVOH) and polyvinyl acetates (PVAc), and
(c) at least one additive being selected from the group of rheology modifiers, viscosity regulators, thickening agents and their compounds and combinations,
wherein the binder composition has a solids content of 0.2 to 25 wt.-%, relating to the binder composition, and wherein the binder composition has a Brookfield viscosity at 20 °C in the range of 20 to 1,500 mPas.

8. The binder composition according to claim 7, **characterised in that** the binder composition has a Brookfield viscosity at 20 °C in the range of 50 to 1,000 mPas, more preferably 70 to 800 mPas, particularly preferably 90 to 600 mPas, very particularly preferably 100 to 400 mPas, and/or that the binder composition is designed to be sprayable.

9. The binder composition according to claim 7 or 8, **characterised in that** the binder composition has a weight-related ration of adhesive (b) to additive (c) in the range of 5:1 to 1:5, particularly 4:1 to 1:3, preferably 3.5:1 to 1:2, more preferably 3:1 to 1:1.5, particularly preferably 2.5:1 to 1:1, in relation to the solids content of the binder composition.

10. The binder composition according to one of claims 7 to 9, **characterised in that** the binder composition contains the adhesive (b) in quantities of 0.05 to 30 wt.-%, particularly 0.02 to 20 wt.-%, preferably 0.1 to 15 wt.-%, more preferably 0.3 to 10 wt.-%, particularly preferably 0.5 to 5 wt.-%, in relation to the binder composition.

11. The binder composition according to one of claims 7 to 10, **characterised in that** the additive (c) is selected from the group of metal soaps, modified fat derivatives, starches, particularly modified starches, celluloses, particularly modified celluloses, preferably hydroxyethylcellulose, carboxymethyl cellulose, hydroxypropylmethylcellulose, hydroxypropylcellulose, ethylhydroxyethylcellulose, polyvinyl alcohols, poly(meth) acrylates, polyacrylamids, polyvinylpyrrolidones, polyethylenglycoles, polyamides and their compounds and combinations, particularly starches and/or celluloses, preferably modified starches and/or modified celluloses, more preferably cold-water soluble starches.

12. The binder composition according to one of claims 7 to 11, **characterised in that** the binder composition contains the additive (c) in quantities of 0.05 to 30 wt.-%, particularly 0.02 to 20 wt.-%, preferably 0.1 to 10 wt.-%, more preferably 0.3 to 5 wt.-%, particularly preferably 0.5 to 3 wt.-%, in relation to the binder composition.

13. The binder composition according to one of claims 7 to 12, **characterised in that** the binder composition exists in the form of a binder concentrate.

14. Use of a binder composition according to one of claims 7 to 13 to solidify plant substrates, particularly for utilising fine-particle peat.

15. A plant substrate being obtainable according to one of claims 1 to 6.

## Revendications

1. Procédé pour rendre exploitable une tourbe en fines particules, en particulier un procédé pour améliorer la résistance de substrats végétaux,
**caractérisé en ce que**
un mélange de substrats comprenant de la tourbe, contenant au moins une composition liante comprenant au moins un liant, est transféré, la composition liante étant fabriquée à partir d'une dispersion ou d'une solution, le dispersant ou le solvant étant de l'eau, la composition liante comprenant au moins un adhésif en dispersion à base d'un polymère adhésif organique, le polymère adhésif étant choisi dans le groupe constitué par les polyuréthanes (PU), les polylactides (PLA), les acrylates, le chloroprène, les copolymères acétate de vinyle-éthylène (VAE), les alcools polyvinyliques (PVOH) et les polyvinylacétates (PVAc), la composition liante ayant une teneur en matières solides de 0,2 à 25 % en poids, par rapport à la composition liante, et la composition liante ayant une viscosité de Brookfield à 20 °C située dans la plage allant de 20 à 1 500 mPas, et
**en ce que** le liant est enfin admis à réticuler.

2. Procédé selon la revendication 1, **caractérisé en ce que** le mélange comprenant le substrat végétal et la composition liante sont transférés dans une matrice, en particulier dans des plateaux de végétaux, et **en ce que** le liant est enfin admis à réticuler.

3. Procédé selon la revendication 1 ou 2, **caractérisé en ce que** le transfert du mélange comprenant la composition liante et le substrat végétal dans la matrice est réalisé sous pression ou en l'absence de pression, de préférence en l'absence de pression.

4. Procédé selon l'une des revendications précédentes, **caractérisé en ce que** la composition liante contient le dispersant ou le solvant à hauteur d'au moins 60 à 99,9 % en poids, en particulier de 75 à 99,8 % en poids, de préférence de 85 à 99,5 % en poids, préférentiellement de 90 à 99,2 % en poids, de manière particulièrement préférée de 95 à 99 % en poids, par rapport à la composition liante.

5. Procédé selon l'une des revendications précédentes, **caractérisé en ce que** la composition liante contient l'adhésif à hauteur d'au moins 0,05 à 40 % en poids, en particulier de 0,15 à 25 % en poids, de préférence de 0,3 à 15 % en poids, préférentiellement de 0,5 à 10 % en poids, de manière particulièrement préférée de 0,5 à 5 % en poids, par rapport à la composition liante.

6. Procédé selon l'une des revendications précédentes, **caractérisé en ce que** la composition liante a une viscosité de Brookfield à 20 °C située dans la plage allant de 50 à 1 000 mPas, de préférence de 70 à 800 mPas, de manière particulièrement préférée de 90 à 600 mPas, de manière particulièrement préférée entre toutes de 100 à 400 mPas, et/ou **en ce que** la composition liante est fabriquée par pulvérisation.

7. Composition liante sous forme de dispersion ou de solution pour la solidification de substrats végétaux, **caractérisée en ce que** la composition liante
(a) contient au moins un dispersant ou un solvant, le dispersant ou le solvant étant de l'eau,
(b) au moins un adhésif, l'adhésif étant choisi dans le groupe constitué par les polyuréthanes (PU), les polylactides (PLA), les acrylates, le chloroprène, les copolymères acétate de vinyle-éthylène (VAE), les alcools polyvinyliques (PVOH) et les polyvinylacétates (PVAc), et
(c) au moins un additif choisi dans le groupe constitué par des modificateurs de la rhéologie, des régulateurs de la viscosité, des épaississants ainsi que des mélanges ou des combinaisons de ceux-ci,
la composition liante ayant une teneur en matières solides de 0,2 à 25 % en poids, par rapport à la composition liante, et la composition liante ayant une viscosité de Brookfield à 20 °C située dans la plage allant de 20 à 1 500 mPas.

8. Composition liante selon la revendication 7, **caractérisée en ce que** la composition liante a une viscosité de Brookfield à 20 °C située dans la plage allant de 50 à 1 000 mPas, de préférence de 70 à 800 mPas, de manière particulièrement préférée de 90 à 600 mPas, de manière particulièrement préférée entre toutes de 100 à 400 mPas, et/ou **en ce que** la composition liante est fabriquée par pulvérisation.

9. Composition liante selon la revendication 7 ou 8, **caractérisée en ce que** la composition liante a une proportion moyenne en poids d'adhésif (b) par rapport à l'additif (c) située dans la plage allant de 5:1 à 1:5, en particulier de 4:1 à 1:3, de préférence de 3,5:1 à 1:2, préférentiellement de 3:1 à 1:1,5, de manière particulièrement préférée de 2,5:1 à 1:1, par rapport à la teneur en matières solides de la composition liante.

10. Composition liante selon l'une des revendications 7 à 9, **caractérisée en ce que** la composition liante contient l'adhésif (b) à hauteur d'au moins 0,05 à 30 % en poids, en particulier de 0,02 à 20 % en poids, de préférence de 0,1 à 15 % en poids, préférentiellement de 0,3 à 10 % en poids, de manière particulièrement préférée de 0,5 à 5 % en poids, par rapport à la composition liante.

11. Composition liante selon l'une des revendications 7 à 10, **caractérisée en ce que** l'additif (c) est choisi dans le groupe constitué par des savons métalliques, des dérivés gras modifiés, des amidons, en particulier des amidons modifiés, des celluloses, en particulier des celluloses modifiées, de préférence de l'hydroxyéthylcellulose, de la carboxyméthylcellulose, de l'hydroxypropylméthylcellulose, de l'hydroxypropylcellulose, de l'éthylhydroxyéthylcellulose, des alcools polyvinyliques, des poly(méth)acrylates, des polyacrylamides, de la polyvinylpyrrolidone, des polyéthylèneglycols, des polyamides, ainsi que des mélanges et des combinaisons de ceux-ci, en particulier des amidons et/ou des celluloses, de préférences des amidons modifiés et/ou des celluloses modifiées, de préférence des amidons hydrosolubles à froid.

12. Composition liante selon l'une des revendications 7 à 11, **caractérisée en ce que** la composition liante contient l'additif (c) à hauteur d'au moins 0,05 à 30 % en poids, en particulier de 0,02 à 20 % en poids, de préférence de 0,1 à 10 % en poids, préférentiellement de 0,3 à 5 % en poids, de manière particulièrement préférée de 0,5 à 3 % en poids, par rapport à la composition liante.

13. Composition liante selon l'une des revendications 7 à 12, **caractérisée en ce que** la composition liante se trouve sous la forme d'un concentré de liant.

14. Utilisation d'une composition liante selon l'une des revendications 7 à 13, pour la solidification de substrats végétaux, en particulier pour rendre exploitable une tourbe en fines particules.

15. Substrat végétal obtenu selon l'une des revendications 1 à 6.
